# EUROPEAN PATENT APPLICATION

(11) **EP 3 919 998 A1**
(43) Date of publication of application: **08.12.2021**
(21) Application number: 21181727.5
(22) Date of filing: 21.11.2019
(51) Int. Cl.: G05D 1/00

(54) **A METHOD FOR INDUCING AN AUTONOMOUS BEHAVIOR INTO AN UNMANNED VEHICLE, AND A COMMUNICATION UNIT FOR USE IN SUCH A METHOD**

(30) Priority: 22.11.2018 DK PA201800898
(62) Divisional of application: 19808769.4
(71) Applicant: Lorenz Technology ApS, 1. 5260 Odense S (DK)
(72) Inventor: Skaarup, Lars, Kristian, 5210 Odense NV (DK); Olsen, Anders, 5200 Odense V (DK); Egeberg, Mathias, Højgaard, 5000 Odense C (DK); Pedersen, Christian, Koed, 5260 Odense S (DK)
(74) Representative: Larsen & Birkeholm A/S

(57) **Abstract**

The present invention relates to a method for inducing an autonomous behavior into an unmanned vehicle, and a communication unit adapted for being mounted on an unmanned vehicle for use in such a method.

## Description

### Technical field of the invention

The present invention relates to control of unmanned vehicles.

### Background of the invention

An unmanned vehicle, which may also be referred to as an autonomous vehicle, is a vehicle capable of travel without a human operator being physically present. An unmanned vehicle may operate in a remote-control mode, in an autonomous mode, or in a partially autonomous mode.

When an unmanned vehicle operates in a remote-control mode, a pilot or driver that is at a remote location can control the unmanned vehicle via commands that are sent to the unmanned vehicle via a wireless link. When the unmanned vehicle operates in autonomous mode, the unmanned vehicle typically moves based on pre-programmed navigation waypoints, dynamic automation systems, or a combination of these.

One of the challenges of most unmanned vehicles, such as drones, is that they cannot react on what they see, and thereby deviate from predefined routes and commands. Therefore, very experienced pilots or drivers are needed for most of the monitoring tasks.

It is therefore desirable to provide a solution, which can overcome some of these issues.

### Summary of the invention

A first aspect relates to a method for inducing an autonomous behavior into an unmanned vehicle comprising the steps of:
a) providing an unmanned vehicle comprising a motor controller and a position sensor;
b) providing a communication unit enclosed in a housing, said housing, preferably waterproof, provided with means adapted for mounting said housing to an unmanned vehicle; said communication unit comprising a control module;
c) mounting said communication unit on said unmanned vehicle, and connecting said control module with said unmanned vehicle's motor controller and position sensor;
d) mounting a sensor unit on said unmanned vehicle and connecting it with said communication unit's control module; wherein said sensor unit is adapted for providing monitoring data about a physical or chemical condition in the surroundings relative to said unmanned vehicle;
wherein said control module is configured to instruct said unmanned vehicle to navigate a predefined or autonomously generated route by communicating with said unmanned vehicle's motor controller and position sensor;
wherein said control module is configured to autonomously instruct said unmanned vehicle, by communicating with said unmanned vehicle's motor controller and position sensor, to deviate from said predefined or autonomously generated route when monitoring data from said sensor unit is analyzed by said control module to be more important than to continue said predefined or autonomously generated route; wherein the deviating route is planned continuously by said control module in accordance with received monitoring data from said sensor unit.

In the present context, the term "waterproof housing" is meant to include a covering that surrounds the electronic parts of the communication unit, rendering the communication unit impermeable or resistant to water and/or moisture. The covering is enough to prevent permeation of water or moisture that would result in short-circuiting or malfunctioning of the electronic parts of the communication unit.

In one or more embodiments, the communication unit's housing is configured as a heat sink for the communication unit's electronic parts; wherein the communication unit is mounted on the outer surface of the unmanned vehicle, thereby allowing said housing to be air cooled by the surrounding atmosphere. Preferably, the housing is provided with means adapted for mounting the housing to an unmanned vehicle. The means may preferably be configured with legs (e.g. 2 or more legs, such as four legs) with bolt holes. The legs may be configured such that they the extend away from the housing. This configuration allows the housing to be distanced from the unmanned vehicle onto which it is mounted in order to provide air cooling on all major surfaces of said housing. The housing may preferably be configured as a heat sink comprising a region with heat dissipating lamellae.

In one or more embodiments, step c) further comprises determining said motor controller's computer operating language with said communication unit and configuring said communication unit to communicate with said motor controller in said determined computer operating language. In one or more embodiments, the determination of the said motor controller's computer operating language is performed by sending a request with said communication unit to said motor controller in predefined computer operating languages and detecting by said communication unit the computer operating language of the response from said motor controller. This configuration allows the communication unit to automatically adjust to the computer operating language of any unmanned vehicle on which it is mounted. The request may e.g. be a simple hello or handshake request message.

In one or more embodiments, the communication unit further comprises a transceiver unit connected to said control module; and wherein step d) further comprises connecting said transceiver unit to said sensor unit; wherein said transceiver unit is configured to:
- continuously transmit said monitoring data from said sensor unit to a control station;
- receive an analysis of said monitoring data from said control station; and
- pass said analysis to said control module;
wherein the control module is configured to autonomously instruct the unmanned vehicle to deviate from the predefined or autonomously generated route when the analysis of said monitoring data is determined by said control module to be more important than to continue said predefined or autonomously generated route; wherein the deviating route is planned continuously by said control module in accordance with received monitoring data.

In one or more embodiments, the communication unit further comprises a first and a second transceiver unit each connected to the control module; and wherein step d) further comprises connecting said first and a second transceiver unit to the sensor unit; wherein each transceiver unit is configured to continuously transmit said monitoring data from the sensor unit to a control station, to receive an analysis of said monitoring data from the control station, and to pass said analysis to the control module; and wherein the first transceiver unit is operating through a different commercial telecommunications network than the second transceiver unit.

In one or more embodiments, the communication unit further comprises control means configured to direct a given package of monitoring data through the first or the second transceiver unit in response to received data about the quality of service of the first and second transceiver units' link to the control station.

In one or more embodiments, the sensor unit is selected from an infrared sensor, acoustic sensor, induction sensor, motion sensor, optical sensor, opacity sensor, proximity sensor, inductive sensor, passive infrared proximity sensor, radar, laser sensor, magnetic sensor, thermal imaging sensor, thermocouple, thermistor, photoelectric sensor, ultrasonic sensor, infrared laser sensor, inertial motion sensor, MEMS internal motion sensor, ultrasonic 3D motion sensor, chemical sensor, ozone sensor, smoke sensor, heat sensor, magnetometer, carbon dioxide detector, carbon monoxide detector, oxygen sensor, smoke detector, optical sensor, temperature sensor, gas sensor, pressure sensor, nearfield sensor, multispectral sensor, and combinations thereof.

A second aspect of the present invention relates to a communication unit adapted for being mounted on an unmanned vehicle and adapted for inducing an autonomous behavior into said unmanned vehicle, the communication unit comprising:
i) a control module configured to communicate with a) the unmanned vehicle's motor controller and position sensor, and b) a sensor unit mounted on the unmanned vehicle;
wherein the control module is configured to instruct the unmanned vehicle to navigate a predefined or autonomously generated route;
wherein the control module is configured to autonomously instruct the unmanned vehicle to deviate from the predefined or autonomously generated route when monitoring data from the sensor unit is analyzed by said control module to be more important than to continue said predefined route; wherein the deviating route is planned continuously by said control module in accordance with received monitoring data.

Preferably, the communication unit is enclosed in a waterproof housing. In one or more embodiments, the housing is provided with means adapted for mounting said housing to an unmanned vehicle.

In the present context, the term "unmanned vehicle" is to include unmanned ground vehicles (UGV), unmanned aerial vehicles (UAV), unmanned underwater vehicles (UUV), unmanned maritime vehicles (UMV), and the like. Preferably, the unmanned vehicle is an unmanned aerial vehicle (UAV), such as a drone.

The communication unit according to the present invention is capable of being mounted to existing types of unmanned vehicles, and thereby to induce an autonomous behavior into said unmanned vehicle by communicating with the unmanned vehicle's motor controller and position sensor, and with a sensor unit mounted on the unmanned vehicle. By using the continuous stream of data from the sensor unit, the control module is configured to autonomously instruct the unmanned vehicle to deviate from the predefined or autonomously generated route when monitoring data from the sensor unit is analyzed by said control module to be more important than to continue said predefined or autonomously generated route.

In one or more embodiments, the control module is configured to determine the computer operating language of an unmanned vehicle's motor controller when connected thereto, and further configured to continue the communication with said motor controller in said determined computer operating language. In one or more embodiments, the determination of the said motor controller's computer operating language is performed by sending a request to said motor controller in predefined computer operating languages; wherein said control module is further configured to detect by the computer operating language of the response from said motor controller. This configuration allows the communication unit to automatically adjust to the computer operating language of any unmanned vehicle on which it is mounted. The request may e.g. be a simple hello or handshake request message.

In one or more embodiments, the sensor unit is selected from infrared sensor, acoustic sensor, induction sensor, motion sensor, optical sensor, opacity sensor, proximity sensor, inductive sensor, passive infrared proximity sensor, radar, laser sensor, magnetic sensor, thermal imaging sensor, thermocouple, thermistor, photoelectric sensor, ultrasonic sensor, infrared laser sensor, inertial motion sensor, MEMS internal motion sensor, ultrasonic 3D motion sensor, chemical sensor, ozone sensor, smoke sensor, heat sensor, magnetometer, carbon dioxide detector, carbon monoxide detector, oxygen sensor, smoke detector, optical sensor, temperature sensor, gas sensor, pressure sensor, nearfield sensor, multispectral sensor, and combinations thereof.

The analysis of the monitoring data is performed by the control module and is performed in accordance with predefined rules and/or by using incorporated machine learning algorithms, such as trained neural networks, e.g. deep neural network algorithms. Examples of important events may be identification of a predefined target, moving or stationary. The target may be an open window or door in a building, a person, an animal, a hole in a fence, a number plate/vehicle identification number, or the like. The target may e.g. be identified by shape identification, optionally in combination with infrared heat variation in a specific two- or three-dimensional area.

The deviation from the predefined or autonomously generated route may e.g. be to track a moving target, or to stay a predefined distance from a stationary target.

In one or more embodiments, the communication unit further comprises:
ii) a transceiver unit connected to the control module and to the sensor unit; wherein the transceiver unit is configured to continuously transmit said monitoring data from the sensor unit to a control station, to receive an analysis of said monitoring data from the control station, and to pass said analysis to the control module;
wherein the control module is configured to autonomously instruct the unmanned vehicle to deviate from the predefined or autonomously generated route when the analysis of said monitoring data is determined by said control module to be more important than to continue said predefined or autonomously generated route; wherein the deviating route is planned continuously by said control module in accordance with received monitoring data. This configuration is particularly suitable, if the data processing step is too extensive for the control module to perform by itself. The control station thereby aids in the data processing, but it is still the control module that makes the decision to deviate or not from the predefined or autonomously generated route.

In one or more embodiments, the sensor unit is a motion sensor and/or an optical sensor, and wherein when the analysis of the monitoring data or the received analysis of the monitoring data is determined by the control module to be more important than to continue said predefined or autonomously generated route, and to be indicative of a moving target, said control module is configured to autonomously instruct the unmanned vehicle to follow said moving target from a predefined distance therefrom continuously using the input from said motion sensor and/or an optical sensor.

In one or more embodiments, wherein when the analysis of the monitoring data or the received analysis of the monitoring data is determined by the control module to be more important than to continue said predefined or autonomously generated route, and to be indicative of a moving target, said control module is configured to autonomously instruct the unmanned vehicle to follow said moving target from a predefined distance therefrom continuously using the input from said sensor unit.

In one or more embodiments, wherein when the moving target crosses a predefined two- or three-dimensional border, such as a geographical border, said control module is configured to instruct the unmanned vehicle to stop following said moving target, and to continue said predefined or autonomously generated route.

In one or more embodiments, the unmanned vehicle comprises an optical camera and/or thermal camera, and wherein the transceiver unit is configured to continuously transmit a live feed of the moving target to a control station. Similarly, the transceiver unit may be configured to continuously transmit a live feed of the stationary target to a control station.

In one or more embodiments, the communication unit further comprises a first and a second transceiver unit each connected to the control module and to the sensor unit; wherein each transceiver unit is configured to continuously transmit said monitoring data from the sensor unit to a control station, to receive an analysis of said monitoring data from the control station, and to pass said analysis to the control module; and wherein the first transceiver unit is operating through a different commercial telecommunications network than the second transceiver unit. This configuration minimizes loss of analysis data, and thereby secures that the unmanned vehicle is performing optimally in every situation.

In one or more embodiments, the communication unit further comprises control means configured to direct a given package of monitoring data through the first or the second transceiver unit in response to received data about the quality of service of the first and second transceiver units' link to the control station.

In one or more embodiments, the control module is configured to instruct the unmanned vehicle to navigate an autonomously generated route, and wherein the autonomously generated route is determined according to a preset set of rules, and wherein said preset set of rules comprises the rule of staying within a predefined two- or three-dimensional border.

In one or more embodiments, wherein when the analysis of the monitoring data or the received analysis of the monitoring data is determined by the control module to be more important than to continue said predefined or autonomously generated route, and to be indicative of a stationary target, said control module is configured to autonomously instruct the unmanned vehicle to stay at a predefined distance from the stationary target.

In one or more embodiments, the sensor unit is a motion sensor and/or an optical sensor, and wherein when the analysis of the monitoring data or the received analysis of the monitoring data is determined by the control module to be more important than to continue said predefined or autonomously generated route, and to be indicative of a stationary target, said control module is configured to autonomously instruct the unmanned vehicle to stay at a predefined distance from the stationary target.

In one or more embodiments, the control module is configured to control the movement of the sensor unit(s) mounted on the unmanned vehicle.

In general, the control module may be configured to receive a signal from a pilot or driver or control station to instruct the unmanned vehicle to return to navigate a predefined or autonomously generated route after a deviation from said route has occurred.

A third aspect relates to an unmanned vehicle comprising a communication unit in accordance with the present invention.

A fourth aspect relates to an unmanned vehicle with induced autonomous behavior produced by the method according to the present invention.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 shows an example of how an unmanned vehicle, here a drone, equipped with the communication unit according to the present invention may be used;
Figure 2 shows an example of a control module in accordance with various embodiments of the invention;
Figure 3 shows a communication unit in a housing in accordance with various embodiments of the invention.

### Detailed description of the invention

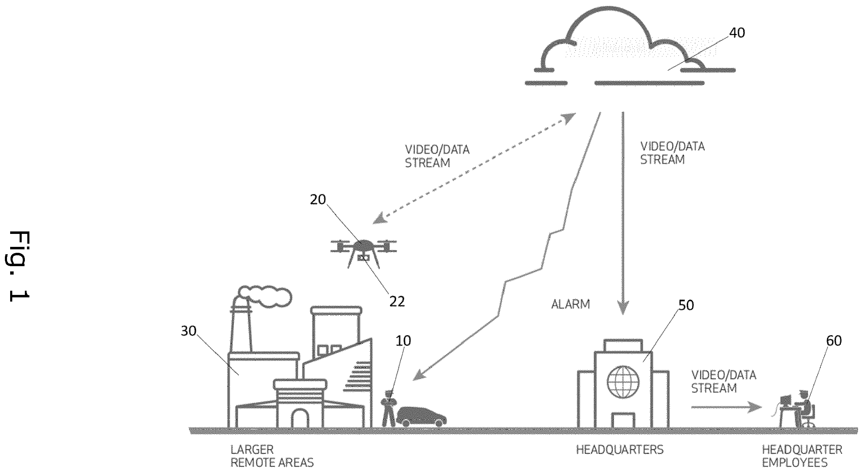

Figure 1 shows an example of how an unmanned vehicle, here a drone, equipped with the communication unit according to the present invention may be used. A drone pilot/operator 10 is using the drone 20 to monitor a factory 30 and its neighboring areas. Onboard is mounted a communication unit (not shown) in accordance with various embodiments of the present invention. Once the drone 20 was airborne, the communication unit's control module instructed the drone 20 to navigate a route that was autonomously generated by said same control module. The control module has at present detected a person (not shown) at the factory site that is hidden from the drone pilot/operator 10 by analyzing monitoring data from an optical sensor (an optical camera and a thermal camera) 22 mounted on the drone 20. The person is moving around at the factory site at a location that is predefined to be without workers at the given time of day. The control module therefore determines that the person is an important event, and that the drone should deviate from the autonomously generated route and instructs the drone to follow said moving target from a predefined distance therefrom continuously using the input from said sensor. The communication unit further comprises a transceiver unit connected to the control module and to the sensor unit. The transceiver unit is configured to continuously transmit data (e.g. alarms) and a live feed (from the optical camera and/or thermal camera) of the moving target to a control station 40. The control station 40 is here depicted as having cloud-based services. An alarm is also sent to the control station 40 that a target (the person) has been identified at the factory site. The drone pilot/operator 10 is a security guard whose employer (a security company) is using the control station's cloud-based services. The headquarter 50 of the security company and the security guard 10 both receive an alarm from the control station 40 that a person has been identified. Employees 60 at the headquarter 50 are then capable of viewing the live feed and deciding what actions to take, e.g. to alert the police, to call for assistance to the security guard, or to direct the security guard to the site where the person is hiding. If the person is identified as a worker that is allowed to be there, the employees 60 are capable to instruct, through the control station 40, the control module to instruct the drone 20 to return to navigate the autonomously generated route. Facial recognition may also be included in the control module, and if the worker is identified by facial recognition, the control module may autonomously decide to instruct the drone 20 to return to navigate the autonomously generated route. Alternatively, if the unidentified person leaves the factory site, the control module may autonomously decide to instruct the drone 20 to return to navigate the autonomously generated route.

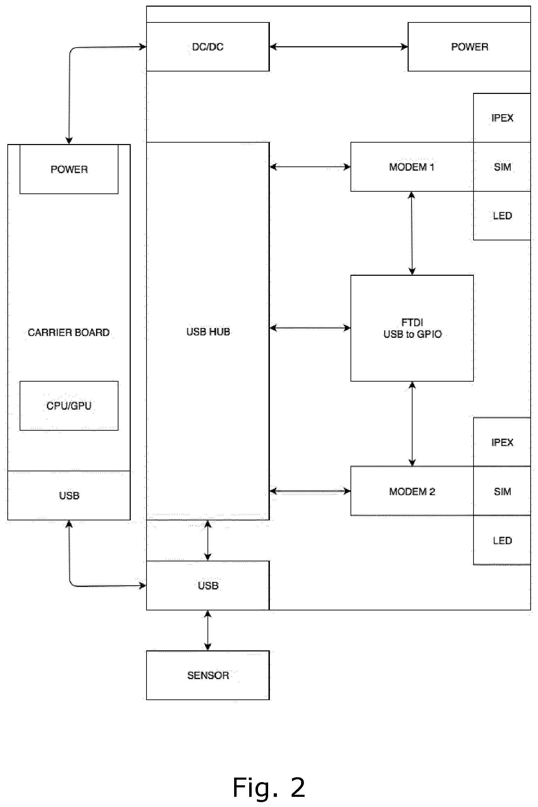

Figure 2 shows an example of control module hardware in accordance with various embodiments of the invention. The control module is shown with a first and a second transceiver unit (modem 1 and 2) each connected to the control module (CPU/GPU) and to the sensor unit (sensor).

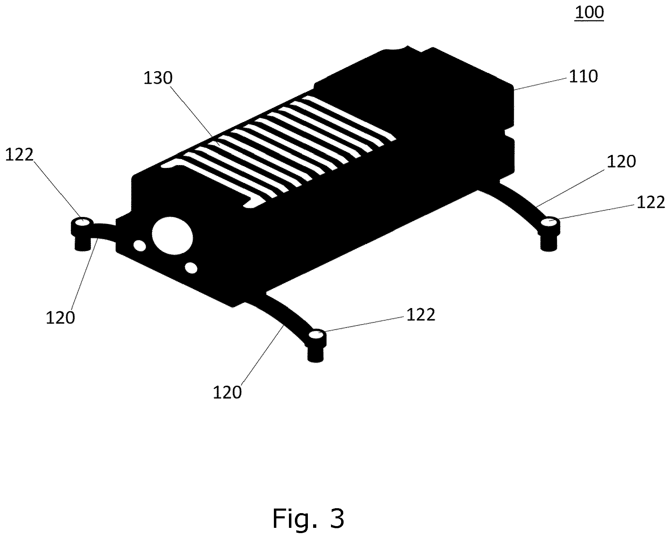

Figure 3 shows a communication unit 100 in a housing 110 in accordance with various embodiments of the invention. The housing 110 is provided with means 120 adapted for mounting the housing 110 to an unmanned vehicle. The means 120 are here configured as four legs (only three may be seen) with bolt holes 122. The legs are configured such that the housing 110 is distanced from the unmanned vehicle onto which it is mounted in order to provide air cooling on all major surfaces of said housing. The housing is configured as a heat sink comprising a region with heat dissipating lamellae 130.

### References

- 10: Drone pilot/operator
- 20: Drone
- 22: Optical sensor
- 30: Factory
- 40: Control station
- 50: Headquarter
- 60: Employee
- 100: Communication unit
- 110: Housing
- 120: Mounting means
- 122: Bolt hole
- 130: Lamellae

## Claims

1. A method for inducing an autonomous behavior into an unmanned vehicle comprising the steps of:
a) providing an unmanned vehicle comprising a motor controller and a position sensor;
b) providing a communication unit enclosed in a housing, preferably waterproof, said housing provided with means adapted for mounting said housing to an unmanned vehicle; said communication unit comprising a control module;
c) mounting said communication unit on said unmanned vehicle,
and connecting said control module with said unmanned vehicle's motor controller and position sensor, including determining said motor controller's computer operating language with said communication unit and configuring said communication unit to communicate with said motor controller in said determined computer operating language;
d) mounting a sensor unit on said unmanned vehicle and connecting it with said communication unit's control module; wherein said sensor unit is adapted for providing monitoring data about a physical or chemical condition in the surroundings relative to said unmanned vehicle;
wherein said control module is configured to instruct said unmanned vehicle to navigate a predefined or autonomously generated route by communicating with said unmanned vehicle's motor controller and position sensor;
wherein said control module is configured to autonomously instruct said unmanned vehicle, by communicating with said unmanned vehicle's motor controller and position sensor, to deviate from said predefined or autonomously generated route when monitoring data from said sensor unit is analyzed by said control module to be more important than to continue said predefined or autonomously generated route; wherein the deviating route is planned continuously by said control module in accordance with received monitoring data from said sensor unit.

2. A method according to claim 1, wherein the communication unit's housing is configured as a heat sink for the communication unit's electronic parts; wherein the communication unit is mounted on the outer surface of the unmanned vehicle, thereby allowing said housing to be cooled by the surrounding atmosphere.

3. A method according to any one of the claims 1-2, wherein the communication unit further comprises a transceiver unit connected to said control module; and wherein step d) further comprises connecting said transceiver unit to said sensor unit;
wherein said transceiver unit is configured to:
- continuously transmit said monitoring data from said sensor unit to a control station;
- receive an analysis of said monitoring data from said control station; and
- pass said analysis to said control module;
wherein the control module is configured to autonomously instruct the unmanned vehicle to deviate from the predefined or autonomously generated route when the analysis of said monitoring data is determined by said control module to be more important than to continue said predefined or autonomously generated route; wherein the deviating route is planned continuously by said control module in accordance with received monitoring data.

4. A method according to any one of the claims 1-3, wherein the communication unit further comprises a first and a second transceiver unit each connected to the control module; and wherein step d) further comprises connecting said first and a second transceiver unit to the sensor unit; wherein each transceiver unit is configured to continuously transmit said monitoring data from the sensor unit to a control station, to receive an analysis of said monitoring data from the control station, and to pass said analysis to the control module; and wherein the first transceiver unit is operating through a different commercial telecommunications network than the second transceiver unit.

5. A method according to any one of the claims 1-4, wherein the determination of the said motor controller's computer operating language is performed by sending a request with said communication unit to said motor controller in predefined computer operating languages and detecting by said communication unit the computer operating language of the response from said motor controller.

6. A communication unit for use in the method according to any one of the claims 1-5, the communication unit comprising:
i) a housing, preferably waterproof, said housing provided with means adapted for mounting said housing to an unmanned vehicle;
ii) a control module positioned within said housing and configured to communicate with a) the unmanned vehicle's motor controller and position sensor, and b) a sensor unit mounted on the unmanned vehicle;
wherein the control module is configured to instruct the unmanned vehicle to navigate a predefined or autonomously generated route;
wherein the control module is configured to autonomously instruct the unmanned vehicle to deviate from the predefined or autonomously generated route when monitoring data from the sensor unit is analyzed by said control module to be more important than to continue said predefined or autonomously generated route; wherein the deviating route is planned continuously by said control module in accordance with received monitoring data;
wherein the control module is configured to determine the computer operating language of an unmanned vehicle's motor controller when connected thereto, and further configured to continue the communication with said motor controller in said determined computer operating language.

7. A communication unit according to claim 6, wherein the determination of the said motor controller's computer operating language is performed by sending a request to said motor controller in predefined computer operating languages; wherein said control module is further configured to detect by the computer operating language of the response from said motor controller.

8. A communication unit according to any one of the claims 6-7, wherein said control module is configured to instruct said unmanned vehicle to navigate an autonomously generated route, and wherein the autonomously generated route is determined according to a preset set of rules, and wherein said preset set of rules comprises the rule of staying within a predefined two- or three-dimensional border.

9. A communication unit according to any one of the claims 6-8, wherein the control module is configured to instruct said unmanned vehicle to navigate an autonomously generated route, and wherein said autonomously generated route is determined according to a preset set of rules, and wherein said preset set of rules comprises the rule of passing said route through one or more predefined waypoints.

10. A communication unit according to any one of the claims 6-9, wherein when the analysis of the monitoring data or the received analysis of the monitoring data is determined by said control module to be more important than to continue said predefined or autonomously generated route, and to be indicative of a moving target, said control module is configured to autonomously instruct the unmanned vehicle to follow said moving target from a predefined distance therefrom continuously using the input from said sensor unit.

11. A communication unit according to claim 10, wherein when the moving target crosses a predefined two- or three-dimensional border, said control module is configured to instruct said unmanned vehicle to stop following said moving target, and to continue said predefined or autonomously generated route.

12. A communication unit according to any one of the claims 6-11, wherein the means adapted for mounting the housing to an unmanned vehicle is configured with legs with bolt holes.

13. A communication unit according to claim 12, wherein the legs are configured such that they the extend away from the housing, thereby allowing said housing to be distanced from the unmanned vehicle onto which it is mounted.

14. An unmanned vehicle comprising a communication unit in accordance with any one of the claims 6-13.

15. An unmanned vehicle with induced autonomous behavior produced by the method according to any one of the claims 1-8.
